# EUROPÄISCHE PATENTSCHRIFT

(11) **EP 0 849 491 B1**
(45) Veröffentlichungstag und Bekanntmachung des Hinweises auf die Patenterteilung: **05.02.2003**
(21) Anmeldenummer: 97120652.9
(22) Anmeldetag: 25.11.1997
(51) Int. Cl.: F16F 3/087, F16F 1/387

(54) **Pendelstütze**
Sway braze
Support pendulaire

(30) Priorität: 29.11.1996 DE 29620812 U
(43) Veröffentlichungstag der Anmeldung: 24.06.1998
(73) Patentinhaber: Trelleborg Automotive Technical Centre GmbH, 56203 Höhr-Grenzhausen (DE)
(72) Erfinder: Bascompte, Jordi Vinas, 08240 Manresa (Barcelona) (ES); Tordera, Albert Gimeno, 08027 Barcelona (ES); Peralta, Antonio Jordana, 09292 Esparreguera (ES)
(74) Vertreter: Preissner, Nicolaus, Dipl.-Ing.

(56) Entgegenhaltungen:
- EP-A- 0 320 088
- EP-A- 0 647 787
- DE-A- 19 631 893
- US-A- 3 362 252
- US-A- 3 825 090
- US-A- 4 240 517
- US-A- 4 467 992
- US-A- 5 282 396
- PATENT ABSTRACTS OF JAPAN vol. 1996, no. 12, 26. Dezember 1996 (1996-12-26) & JP 08 210408 A (TOKAI RUBBER IND LTD), 20. August 1996 (1996-08-20)
- PATENT ABSTRACTS OF JAPAN vol. 1996, no. 12, 26. Dezember 1996 (1996-12-26) & JP 08 200419 A (TOKAI RUBBER IND LTD), 6. August 1996 (1996-08-06)
- PATENT ABSTRACTS OF JAPAN vol. 1996, no. 12, 26. Dezember 1996 (1996-12-26) & JP 08 200418 A (TOKAI RUBBER IND LTD), 6. August 1996 (1996-08-06)

## Beschreibung

Die Erfindung betrifft eine Pendelstütze, insbesondere zur Abstützung eines Motoraggregats, die mit einem Stützarm, wenigstens einem Gehäuse, das mit dem Stützarm verbunden ist und das eine Innenöffnung aufweist, einer in der Innenöffnung angeordneten Innenhülse und mindestens einem Elastomerkörper, dessen Außenseite an der Innenseite des Gehäuses anliegt, versehen ist. Die Pendelstütze bildet einen den Elastomerkörper umschließenden Tragkäfig, der aus dem Stützarm und dem wenigstens einen Gehäuse geformt ist. Der Tragkäfig ist in Längsausdehnung der Pendelstütze horizontal in zwei Tragkäfigteile geteilt.

Eine derartige Pendelstütze wird in der US-A-5 282 396 beschrieben. Außerdem ist aus der DE-A-26 11 299 eine elastische Lagerung für einen Aufhängerarm bekannt, der endseitig ein mit einer Innenbohrung versehenes Gehäuse aufweist. In dem Gehäuse ist eine aus einer Außenhülse und einer Innenhülse bestehende Hülsenanordnung aufgenommen. Die Innenhülse ist über zwei beabstandete Elastomerkörper an der Außenhülse abgestützt. Die Außenhülse ist genau in die Innenöffnung des Gehäuses eingepaßt. Zwischen den beiden Elastomerkörpern ist ein Gummianschlag vorgesehen, der bezüglich der Außenhülse einen Freiweg aufweist. Die Ausgestaltung mit einer Außenhülse, die mittels Preßpassung in die Innenöffnung des Gehäuses eingepaßt ist, ist wegen der erforderlich Bauteiltoleranzen relativ kostenaufwendig.

Weiterhin beschreibt die DE-A-296 00 679 eine Drehmomentstütze mit einem Stützarm, der an einem ersten Endbereich eine Abstützfläche und an einem zweiten Endbereich ein Gehäuse aufweist. In dem Gehäuse ist eine Innenöffnung vorgesehen, in der eine Innenhülse mittels mindestens zwei beabstandeten Elastomerkörpern abgestützt ist. Dabei liegt die Außenseite der mindestens zwei Elastomerkörper jeweils an der Innenseite des Gehäuses an. Bei der Herstellung der Drehmomentstütze wird zunächst die Innenhülse hergestellt. Anschließend erfolgt die Vulkanisation der Elastomerkörper um die Innenhülse. Dieses Bauteil wird dann in das Gehäuse des Stützarms eingepreßt.

Die Fertigungsweise der separaten Herstellung der Gummi-Metallteile und der anschließenden Komplettmontage weist eine Reihe positiver Eigenschaften auf. Diese positiven Eigenschaften sind beispielsweise gute Einstellbarkeit der Steifigkeit eines jeden Elastomerkörpers, Verwendbarkeit von unterschiedlichen Mischungen für die Elastomerkörper oder gute Variierbarkeit der Korrosionsbeständigkeit. Nachteilig bei der Fertigungsweise der eingangs genannten Stützen ist jedoch eine hohe Anzahl von Einzelteilen, für deren Verarbeitung mehrere Verarbeitungsschritte erforderlich sind. Dies führt zu einem erhöhten Handlings- und Logistikaufwand. Deshalb ist die im Stand der Technik bekannte Fertigungsweise der Drehmomentstütze relativ kostenintensiv.

Ausgehend vom genannten Stand der Technik liegt der Erfindung die Aufgabe zugrunde, eine Pendelstütze vorzuschlagen, bei der die vorstehend genannten Nachteile vermieden werden.

Zur Lösung der genannten Aufgabe wird in Übereinstimmung mit Anspruch 1 bei einer Pendelstütze mit den eingangs genannten Merkmalen vorgeschlagen, daß der Elastomerkörper direkt in das Gehäuse einvulkanisiert und mit diesem stoffschlüssig verbunden ist, daß zwischen den beiden Tragkäfigteilen im Bereich des Stützarms wenigstens ein dritter Bereich des Elastomerkörpers vorgesehen ist und daß die beiden Tragkäfigteile durch Gummihaftung miteinander verbunden sind.

Durch die erfindungsgemäße Pendelstütze wird eine erhebliche Reduzierung der erforderlichen Arbeitsschritte und Einzelteile erreicht, wodurch die Pendelstütze zu wesentlichen billigeren Kosten realisiert werden kann.

Vorteilhaft weist der Tragkäfig zwei Tragkäfigteile auf, die miteinander verbunden sind. In besonderer Ausgestaltung der Erfindung sind die beiden Tragkäfigteile identisch ausgebildet. Auf diese Weise lassen sich die Tragkäfigteile auf einfache und kostengünstige Weise, beispielsweise durch ein Tiefziehverfahren herstellen. Durch die anschließende Verbindung der Tragkäfigteile durch Gummihaftung wird dann der Gesamt-Tragkäfig gebildet. Wenn die Tragkäfigteile identisch ausgebildet sind, reicht zur Herstellung der Pendelstütze eine einzige Tiefziehform aus. Dadurch können die Herstellungskosten der Tragkäfigelemente und damit der Pendelstütze weiter reduziert werden. Es ist jedoch auch denkbar, daß die einzelnen Tragkäfigteile eine zueinander unterschiedliche Form und Ausgestaltung haben. Die Verwendung unterschiedlich ausgestalteter Tragkäfigteile ist beispielsweise dann von Interesse, wenn an die Pendelstütze ganz bestimmte Anforderungen gestellt werden.

Zwischen den beiden Tragkäfigteilen ist im Bereich des Stützarms wenigstens ein dritter Bereich des Elastomerkörpers vorgesehen. Der zwischen den Tragkäfigteilen befindliche Elastomerkörper dient unter anderem dem Zweck, die beiden Tragkäfigteile miteinander zu verbinden. Weiterhin dient er auch zur Dämpfung von Schwingungen, zur Aufnahme von Kräften und Momenten und dergleichen.

Vorteilhafte Ausgestaltungen der erfindungsgemäßen Pendelstütze stellen die Gegenstände der Ansprüche 2 bis 10 dar.

Gemäß einer bevorzugten Ausführungsform der Erfindung kann ein zweites Gehäuse mit einer Innenöffnung vorgesehen sein, das mit dem Stützarm verbunden ist, wobei in der Innenöffnung eine Innenhülse sowie wenigstens ein zweiter Bereich des Elastomerkörpers vorgesehen sind. Dabei können die Gehäuse eine unterschiedliche Größe haben. Eine solche Ausführungsform ist beispielsweise dann von Vorteil, wenn störende Resonanzfrequenzen in weniger kritische Bereiche verschoben werden sollen. Dazu kann es weiterhin von Vorteil sein, daß die einzelnen Bereiche des Elastomerkörpers Aussparungen aufweisen.

Die in den Gehäusen der erfindungsgemäßen Pendelstütze angeordneten Innenhülsen können aus unterschiedlichem Material bestehen und/oder unterschiedliche Abmessung aufweisen.

Vorteilhafterweise bestehen zur weiteren Kostenreduzierung der Stützarm und/oder das/die Gehäuse aus Metall und/oder aus tiefziehbarem Material.

Gemäß einer bevorzugten Ausgestaltung der Erfindung weisen die Außenseiten des Tragkäfigs eine Elastomerschicht auf. Diese Elastomerschicht überzieht vorteilhafterweise die gesamten äußeren Flächen des Tragkäfigs. Dadurch erfüllt sie zum einen die Funktion, die beiden Tragkäfigteile zusammen zu halten. Weiterhin schützt die Elastomerschicht, die vorzugsweise aus Metall bestehenden Tragkäfigteile vor äußeren Einflüssen und Beschädigungen wie Korrosion und dergleichen. Zudem sind auf Grund der gut einstellbaren Dicke der Elastomerschicht nur geringe Toleranzanforderungen an die einzelnen Bauteile erforderlich.

Vorteilhafterweise weisen die Tragkäfigteile im Bereich des Stützarms wenigstens eine Durchflußbohrung für das elastomere Material auf.

Gemäß der vorliegenden Erfindung kann die Anzahl der benötigten Elemente sowie die Anzahl der Fertigungs- und Montageschritte im Vergleich zum Stand der Technik gesenkt werden. Wenn bei der Fertigung von Stützen gemäß dem eingangs genannten Stand der Technik zwei Vulkanisationsschritte, ein bis zwei Kalibriervorgänge sowie zwei Einpreßvorgänge notwendig waren, ist bei der Fertigung der erfindungsgemäßen Pendelstütze lediglich ein Vulkanisationsschritt sowie ein Kalibriervorgang erforderlich. Weitere Montagevorgänge sind nicht notwendig. Gemäß der vorliegenden Erfindung wird ein Tragkäfig, der zwei Tragkäfigteile aufweist, die beispielsweise aus Stahlblech oder einem anderen geeigneten Material bestehen und mittels eines Tiefziehvorgangs hergestellt worden sind, mit den notwendigen Innenhülsen direkt in eine Vulkanisationsform eingelegt. Die Verbindung der Tragkäfigteile und der Innenhülsen erfolgt durch den vulkanisierten Elastomerkörper. Die Fertigung des Elastomerkörpers erfolgt in einem einzigen Arbeitsgang. Gleichzeitig mit der Fertigung des Elastomerkörpers kann die auf der Außenseite des Tragkäfigs vorgesehene Elastomerschicht aufvulkanisiert werden. Es ist auch möglich, daß die Tragkäfigteile durch Befestigungsmittel oder Verschweißen miteinander verbunden werden.

Durch die erfindungsgemäße Pendelstütze kann eine deutliche Kostensenkung erzielt werden. Diese Kostensenkung ergibt sich insbesondere aus der Tatsache, daß die Außenhülsen der Buchse im Gehäuse der Pendelstütze, das einen Teil des Tragkäfigs darstellt, integriert sind. Weiterhin können einfache und kostengünstige Tiefziehteile als Tragkäfigteile verwendet werden. Schließlich kann durch die erfindungsgemäße Ausgestaltung der Pendelstütze die Zahl der erforderlichen Einzelteile reduziert werden.

Nachfolgend wird die Erfindung anhand von Ausführungsbeispielen beschrieben, die in den Zeichnungen in schematischer Weise dargestellt sind. Es zeigen:
- Figur 1: eine Draufsicht auf eine Pendelstütze gemäß der voriiegenden Erfindung;
- Figur 2: eine Schnittansicht entlang der Schnittlinie II-II der Pendelstütze nach Figur 1;
- Figur 3: eine Schnittansicht entlang der Schnittlinie III-III der Pendelstütze nach Figur 1 und
- Figur 4: eine Schnittansicht entlang der Schnittlinie IV-IV der Pendelstütze nach Figur 1.

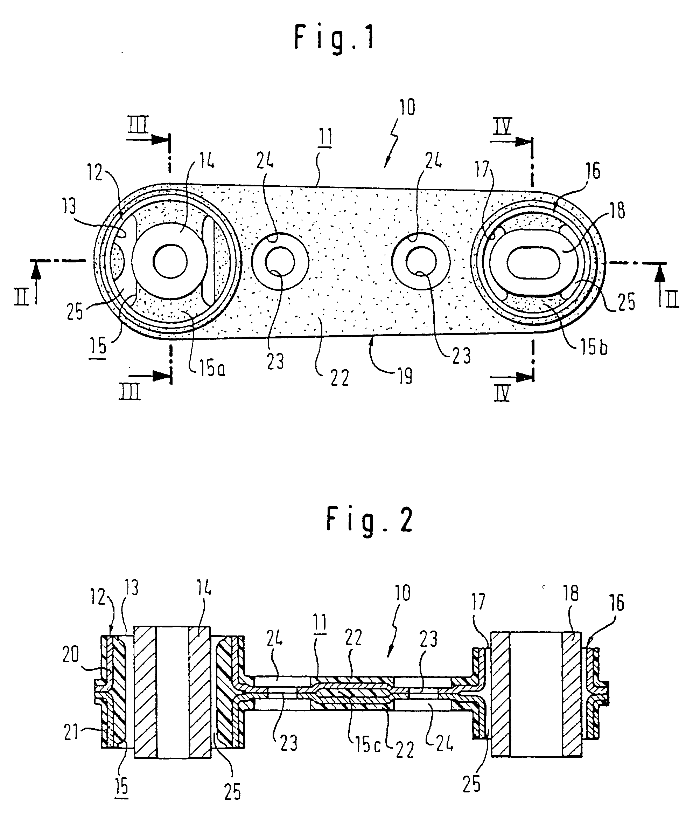

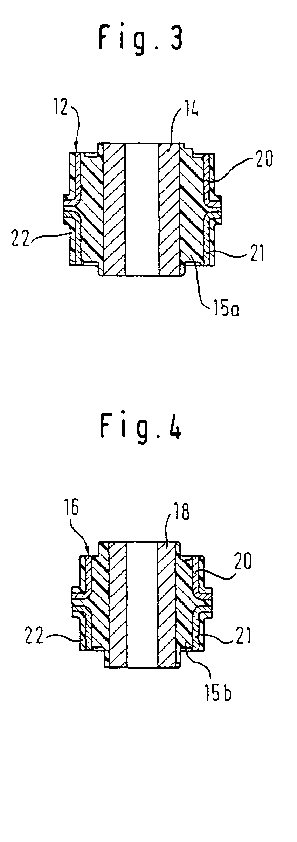

In den Figuren 1 bis 4 ist eine Pendelstütze 10 dargestellt, die einen Stützarm 11 sowie Gehäuse 12 und 16 aufweist. Innerhalb der Gehäuse 12, 16 ist jeweils eine Innenöffnung 13, 17 vorgesehen, in denen jeweils Innenhülsen 14, 18 und Bereiche 15a, 15b eines Elastomerkörpers 15 aufgenommen sind. Die Bereiche 15a, 15b des Elastomerkörpers 15 sind jeweils mit Aussparungen 25 versehen. Der Stützarm 11 sowie die Gehäuse 12, 16 bilden einen Tragkäfig 19. Wie sich insbesondere aus Figur 2 ergibt, ist der Tragkäfig 19 in Längsausdehnung der Pendelstütze 10 horizontal geteilt und besteht aus zwei identischen Tragkäfigteilen 20, 21, die spiegelbildlich angeordnet sind. Im Bereich des Stützarms 11 ist zwischen den Tragkäfigteilen 20, 21 ein weiterer Bereich 15c des Elastomerkörpers 15 ausgebildet.

Wie sich insbesondere aus Figur 2 ergibt, umschließt der aus den Tragkäfigteilen 20, 21 gebildete Tragkäfig 19 die Innenhülsen 14, 18 und die Bereiche 15a, 15b, 15c des Elastomerkörpers 15. Die Außenflächen des Tragkäfigs 19 sind mit einer Elastomerschicht 22 beschichtet. Zudem weisen die Tragkäfigteile 20, 21 jeweils zwei Durchflußbohrungen 23 für das elastomere Material auf.

Nachfolgend wird der Fertigungsvorgang der Pendelstütze 10 beschrieben. Die in einem Tiefziehvorgang hergestellten identischen Tragkäfigteile 20, 21 werden in eine nicht dargestellte Vulkanisationsform eingelegt. Weiterhin sind im vorliegenden Ausführungsbeispiel die Tragkäfigteile 20, 21 spiegelsymmetrisch zueinander angeordnet. Auf diese Weise lassen sich die Tragkäfigteile einfach und kostengünstig herstellen, da nur eine einzige Tiefziehform erforderlich ist. Die Tragkäfigteile 20, 21 werden in Längsausdehnung der herzustellenden Pendelstütze 10 horizontal aufeinander gelegt und bilden somit den Tragkäfig 19. Danach werden die Innenhülsen 14, 18 in den Tragkäfig 19 eingelegt. Anschließend werden in einem einzigen Vulkanisationsvorgang die Bereiche 15a, 15b, 15c des Elastomerkörpers 15 direkt in den Tragkäfig 19 einvulkanisiert und die Elastomerschicht 22 auf die Außenseiten des Tragkäfigs 19 aufvulkanisiert. Die Vulkanisation erfolgt derart, daß die Außenseite des Elastomerkörpers 15 an der Innenseite der Gehäuse 12, 16 anliegt und mit dieser stoffschlüssig verbunden ist. Gleichzeitig wird der Elastomerkörperbereich 15c derart zwischen den Tragkäfigteilen 20, 21 im Bereich des Stützarms 11 einvulkanisiert, daß er stoffschlüssig mit diesem verbunden ist. Beim Vulkanisationsvorgang werden die beiden Tragkäfigteile miteinander verbunden.

Durch die so beschriebene Herstellungsweise der Pendelstütze 10 wird die Anzahl der notwendigen Vulkanisationsschritte auf einen einzigen reduziert. Weiterhin kann die Anzahl der benötigten Bauteile reduziert werden, weil beispielsweise auf entsprechende Außenhülsen verzichtet werden kann. Dies ergibt sich aus dem Umstand, daß der Elastomerkörper 15 direkt an der Innenseite der Gehäuse 12, 16 anvulkanisiert ist.

Die Bereiche 15a, 15b, 15c des Elastomerkörpers 15 und die Elastomerschicht 22 gemäß der vorliegenden Ausführungsform bestehen aus dem gleichen gummielastischen Material. Jedoch ist die vorliegende Erfindung nicht auf die Verwendung von Gummi-Elastomerkörpern beschränkt sondern umfaßt jede weitere denkbare Art von elastischen Körpern. Weiterhin können auch einzelne Bereiche des Elastomerkörpers 15 oder der Elastomerschicht 22 jeweils aus unterschiedlichem Material bestehen. Der Tragkäfig besteht aus tiefziehbarem Material, vorzugsweise aus Stahlblech. Jedoch sind auch andere Materialien, wie beispielsweise Aluminiumdruckgußkomponenten oder dergleichen verwendbar, so daß die vorliegende Erfindung nicht auf die Verwendung von Stahlblech begrenzt ist. Die Innenhülsen 14, 18 bestehen im vorliegenden Ausführungsbeispiel aus Aluminium oder Aluminiumlegierungen. Jedoch ist auch die Verwendung dieser Materialien für die Innenhülsen rein exemplarischer Natur und nicht abschließend zu verstehen.

## Patentansprüche

1. Pendelstütze, insbesondere zur Abstützung eines Motoraggregats, mit einem Stützarm (11), wenigstens einem Gehäuse (12), das mit dem Stützarm (11) verbunden ist und das eine Innenöffnung (13) aufweist, einer in der Innenöffnung (13) angeordneten Innenhülse (14) und mindestens einem Elastomerkörper (15), dessen Außenseite an der Innenseite des Gehäuses (12) anliegt, wobei die Pendelstütze (10) einen den Elastomerkörper (15) umschließenden Tragkäfig (19) bildet, der aus dem Stützarm (11) und dem wenigstens einen Gehäuse (12) geformt ist, und der Tragkäfig (19) in Längsausdehnung der Pendelstütze (10) horizontal in zwei Tragkäfigteile (20, 21) geteilt ist, **dadurch gekennzeichnet, daß** der Elastomerkörper (15) direkt in das Gehäuse (12) einvulkanisiert und mit diesem stoffschlüssig verbunden ist, daß zwischen den beiden Tragkäfigteilen (20, 21) im Bereich des Stützarms (11) wenigstens ein dritter Bereich (15c) des Elastomerkörpers (15) vorgesehen ist und daß die beiden Tragkäfigteile (20, 21) durch Gummihaftung miteinander verbunden sind.

2. Pendelstütze nach Anspruch 1, **dadurch gekennzeichnet, daß** die beiden Tragkäfigteile (20, 21) spiegelsymmetrisch zueinander angeordnet sind.

3. Pendelstütze nach Anspruch 1 oder 2, **dadurch gekennzeichnet, daß** ein zweites Gehäuse (16) mit einer innenöffnung (17) vorgesehen ist, das mit dem Stützarm (11) verbunden ist, und daß in der Innenöffnung (17) eine Innenhülse (18) sowie wenigstens ein zweiter Bereich (15b) des Elastomerkörpers (15) vorgesehen sind.

4. Pendelstütze nach einem der Ansprüche 1 bis 3, **dadurch gekennzeichnet, daß** die Tragkäfigteile (20, 21) identisch ausgebildet sind.

5. Pendelstütze nach Anspruch 3 oder 4, **dadurch gekennzeichnet, daß** jede der Innenhülsen (14, 18) aus unterschiedlichem Material besteht und/oder unterschiedliche Abmessungen aufweist.

6. Pendelstütze nach einem der Ansprüche 1 bis 5, **dadurch gekennzeichnet, daß** der Elastomerkörper (15) Aussparungen (25) aufweist.

7. Pendelstütze nach einem der Ansprüche 1 bis 6, **dadurch gekennzeichnet, daß** der Stützarm (11) und/oder das/die Gehäuse (12, 16) aus Metall und/oder aus tiefziehbarem Material bestehen.

8. Pendelstütze nach einem der Ansprüche 1 bis 7, **dadurch gekennzeichnet, daß** die Außenseiten des Tragkäfigs (19) eine Elastomerschicht (22) aufweisen.

9. Pendelstütze nach einem der Ansprüche 1 bis 8, **dadurch gekennzeichnet, daß** die Tragkäfigteile (20, 21) im Bereich des Stützarms (11) wenigstens eine Durchflußbohrung (23) für das elastomere Material aufweisen.

10. Pendelstütze nach Anspruch 9, **dadurch gekennzeichnet, daß** die Elastomerschicht (22) im Bereich der wenigstens einen Durchflußbohrung (23) Aussparungen (24) aufweist.

## Claims

1. A stabilizer link assembly, more particularly for mounting an engine unit, comprising a supporting arm (11), at least one housing (12) connected to the supporting arm (11) and including an inside hole (13), an inner liner (14) located in the inside hole (13), and at least one elastomeric member (15) whose outer surface contacts the inner surface of the housing (12), said link assembly (10) forming a supporting cage (19) surrounding the elastomeric member (15) and being formed of the supporting arm (11) and the at least one housing (12), the supporting cage (19) being split in the longitudinal projection of said link assembly (10) horizontally into two supporting cage parts (20, 21), **characterized in that** the elastomeric member (15) is directly vulcanized in place in the housing (12) in being materially connected thereto, at least one third portion (15c) of the elastomeric member (15) being provided between the two supporting cage parts (20, 21) in the region of the supporting arm (11), and the two supporting cage parts (20, 21) being interconnected by rubber adherance.

2. The stabilizer link assembly as set forth in claim 1, **characterized in that** the two supporting cage parts (20, 21) are arranged mirror-symmetrical to each other.

3. The stabilizer link assembly as set forth in claim 1 or 2, **characterized in that** a second housing (16) including an inside hole (17) and connected to the supporting arm is provided (11), an inner liner (18) as well as at least one second portion (15b) of the elastomeric member (15) being provided in the inside hole (17).

4. The stabilizer link assembly as set forth in any of the claims 1 to 3, **characterized in that** the supporting cage parts (20, 21) are configured identical.

5. The stabilizer link assembly as set forth in claim 3 or 4, **characterized in that** each of the inner liners (14, 18) is made of a different material and/or dimensioned differently.

6. The stabilizer link assembly as set forth in any of the claims 1 to 5, **characterized in that** the elastomeric member (15) comprises cavities (25).

7. The stabilizer link assembly as set forth in any of the claims 1 to 6, **characterized in that** the supporting arm (11) and/or the housings (12, 16) are made of metal and/or material suitable for deep-drawing.

8. The stabilizer link assembly as set forth in any of the claims 1 to 7, **characterized in that** the outer surfaces of the supporting cage (19) comprise an elastomeric coating (22).

9. The stabilizer link assembly as set forth in any of the claims 1 to 8, **characterized in that** the supporting cage parts (20, 21) comprise at least one flow hole (23) for the elastomer material in the region of the supporting arm (11).

10. The stabilizer link assembly as set forth in claim 9, **characterized in that** the elastomeric coating (22) comprises cavities (24) in the region of the at least one flow hole (23).

## Revendications

1. Support pendulaire, en particulier pour soutenir un groupe moteur, comportant un bras de soutien (11), au moins un boîtier (12) qui est relié au bras de soutien (11) et qui présente une ouverture intérieure (13), une douille intérieure (14) agencée dans l'ouverture intérieure (13), et au moins un corps élastomère (15) dont la face extérieure est en appui sur la face intérieure du boîtier (12), le support pendulaire (10) formant une cage portante (19) entourant le corps élastomère (15), laquelle étant constituée par le bras de soutien (11) et par ledit au moins un boîtier (12), et la cage portante (19) étant divisée à l'horizontale, en extension longitudinale du support pendulaire (10), en deux parties de cage portante (20, 21), **caractérise en ce que** le corps élastomère (15) est vulcanisé directement dans le boîtier (12) et relié à celui-ci par coopération de matière, **en ce qu'**il est prévu entre les deux parties de cage portante (20, 21), dans la région du bras de soutien (11), au moins une troisième région (15c) du corps élastomère (15), et **en ce que** les deux parties de cage portante (20, 21) sont reliées l'une à l'autre par adhérence de caoutchouc.

2. Support pendulaire selon la revendication 1, **caractérise en ce que** les deux parties de cage portante (20, 21) sont agencées symétriquement l'une par rapport à l'autre.

3. Support pendulaire selon l'une ou l'autre des revendications 1 et 2, **caractérisé en ce qu'**il est prévu un deuxième boîtier (16) avec une ouverture intérieure (17), qui est relié au bras de soutien (11), et **en ce que** dans l'ouverture intérieure (17), il est prévu une douille intérieure (18) ainsi qu'au moins une deuxième région (15b) du corps élastomère (15).

4. Support pendulaire selon l'une des revendications 1 à 3, **caractérise en ce que** les parties de cage portante (20, 21) sont réalisées identiques.

5. Support pendulaire selon l'une ou l'autre des revendications 3 et 4, **caractérise en ce que** chacune des douilles intérieures (14, 18) est constituée par un matériau différent et/ou présente des dimensions différentes.

6. Support pendulaire selon l'une des revendications 1 à 5, **caractérise en ce que** le corps élastomère (15) présente des évidements (25).

7. Support pendulaire selon l'une des revendications 1 à 6, **caractérise en ce que** le bras de soutien (11) et/ou le/les boîtier(s) (12, 16) est/sont en métal et/ou en un matériau emboutissable.

8. Support pendulaire selon l'une des revendications 1 à 7, **caractérise en ce que** les faces extérieures de la cage portante (19) présentent une couche élastomère (22).

9. Support pendulaire selon l'une des revendications 1 à 8, **caractérise en ce que** les parties de cage portante (20, 21) présentent dans la région du bras de soutien (11) au moins un perçage de passage (23) pour le matériau élastomère.

10. Support pendulaire selon la revendication 9, **caractérise en ce que** la couche d'élastomère (22) présente des évidements (24) dans la région dudit au moins un perçage de passage (23).
